Europäisches Patentamt

European Patent Office

Office européen des brevets

(19)

(11) **EP 0 917 135 B1**

(12) **EUROPEAN PATENT SPECIFICATION**

(45) Date of publication and mention
of the grant of the patent:
**16.08.2006 Bulletin 2006/33**

(51) Int Cl.:
*G11B 5/62* *(2006.01)*   *G11B 7/24* *(2006.01)*
*G11B 11/10* *(2006.01)*   *C03C 4/00* *(2006.01)*
*C03C 3/087* *(2006.01)*   *C03C 3/095* *(2006.01)*
*G11B 5/64* *(2006.01)*

(21) Application number: **98923132.9**

(22) Date of filing: **04.06.1998**

(86) International application number:
**PCT/JP1998/002486**

(87) International publication number:
**WO 1998/055993 (10.12.1998 Gazette 1998/49)**

(54) **SUBSTRATE FOR INFORMATION RECORDING MEDIA**

SUBSTRAT FÜR INFORMATIONSTRÄGER

SUBSTRAT POUR SUPPORT D'ENREGISTREMENT D'INFORMATION

(84) Designated Contracting States:
**DE FR GB IT**

(30) Priority: **05.06.1997 US 48623 P**
**14.11.1997 US 66675 P**

(43) Date of publication of application:
**19.05.1999 Bulletin 1999/20**

(73) Proprietor: **HOYA CORPORATION**
**Shinjuku-ku**
**Tokyo 161 (JP)**

(72) Inventors:
• **ZOU, Xuelu**
**Shinjuku-ku**
**Tokyo 161-8525 (JP)**

• **HASHIMOTO, Kazuaki**
**Shinjuku-ku**
**Tokyo 161-8525 (JP)**

(74) Representative: **Moir, Michael Christopher et al**
**Mathys & Squire,**
**120 Holborn**
**London EC1N 2SQ (GB)**

(56) References cited:
EP-A- 0 009 418       GB-A- 2 150 553
GB-A- 2 220 654       GB-A- 2 299 991
JP-A- 1 201 043       JP-A- 10 001 327
JP-A- 10 001 329      JP-A- 10 015 128
JP-A- 10 079 122      JP-A- 10 081 540
JP-A- 10 081 542      US-A- 3 804 646
US-A- 4 149 895       US-A- 4 439 528
US-A- 5 491 116       US-A- 5 902 665
US-A- 5 932 500

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical Field

This invention relates to a disk substrate (will hereinafter be referred to as "a substrate for an information recording medium") for use in an information recording medium, such as a magnetic disk, an optical disk, and a magnetooptic disk as well as an information recording medium and, in particular, to a glass substrate for an information recording medium as well as an information recording medium using the above-mentioned substrate.

Background Art

As a substrate for an information recording medium, use is made of an aluminum substrate, an amorphous glass substrate (will simply be referred to as "a glass substrate" hereinafter), and a crystallized glass substrate. Among these substrates, the glass substrate is gradually expanding its market share because high surface smoothness (small surface roughness Ra) is easily obtained as compared with the other substrates and its strength is sufficient to withstand a reduction in thickness and size.

Among the above-mentioned glass substrates, a chemically strengthened glass substrate with its surface chemically strengthened by ion exchange is widely known in the art. Such a chemically strengthened glass substrate may comprise a glass substance including 60.0-70.0 wt% of $SiO_2$, 0.5-14.0 wt% of $Al_2O_3$, 10.0-32.0 wt% of alkali metal oxide, 1.0-15.0 wt% of ZnO, and 1.1-14.0 wt% of $B_2O_3$ and having a linear expansion coefficient, pressure strength, and transverse rupture strength which are not smaller than specific values, respectively (see Japanese Patent Publication (JP-B) No. 4-70262).

As a material for preparing the chemically strengthened glass substrate, use is made of glass substances (a) and (b) mentioned below.

(a) A glass substance including 55-62 wt% of $SiO_2$, 10-18 wt% of $Al_2O_3$, 2-10 wt% of $ZrO_2$, 2-5 wt% of MgO, 0.1-3 wt% of BaO, 12-15 wt% of $Na_2O$, 2-5 wt% of $K_2O$, 0-7 wt% of $P_2O_3$, and 0.5-5 wt% of $TiO_2$, where the total amount of $Al_2O_3$ and $TiO_2$ is 13-20 wt% (see Japanese Unexamined Patent Publication (JP-A) No. 1-167245).

(b) A glass substance including 64-70 wt% of $SiO_2$, 14-20 wt% of $Al_2O_3$, 4-6 wt% of $Li_2O$, 7-10 wt% of $Na_2O$, 0-4 wt% of MgO, and 0-1.5 wt% of $ZrO_2$ (see Japanese Patent Publication (JP-B) No. 6-76224).

Examples of related art includes JP-A-10001329 which discloses high strength glass compositions. Other examples of related art include US-A-3804646 and GB-A-2220654, each of which disclose a glass composition for manufacturing glass fibre; and GB-A-2299991, JP-A-10079122, JP-A-10081540 and JP-A-10081542, each of which disclose glass substrate compositions for magnetic discs.

As regards a hard disk apparatus, technical innovations are being made day by day in order to keep the superiority to other recording/reproducing apparatuses using information recording media such as an optical recording medium and a magnetooptic recording medium. One of the technical innovations is to rotate the magnetic disk at a high speed. Such high speed rotation is one attempt to increase an access speed of a recording/reproducing magnetic head. The rotation speed is expected to exceed 10000 rpm hereafter, although it has been restricted to 5000-7000 rpm in the prior art.

Problem to be Solved by the Invention

As described above, the magnetic disk is desired to be rotated at a high speed. If the high speed rotation is sought by the use of the conventional glass substrate (glass substrate for an information recording medium), it is difficult to keep a stable flying height (the distance between the magnetic head and the magnetic disk upon recording and reproducing operations).

It is a first object of this invention to provide a substrate for an information recording medium, which is easy in obtaining an information recording medium adapted to high speed rotation.

It is a second object of this invention to provide an information recording medium which is easy in obtaining a recording/reproducing apparatus having a high access speed.

It is a third object of this invention to provide an information recording medium which can simultaneously accomplish a high Young's modulus and a low flying height.

It is a fourth object of this invention to provide an information recording medium which has a high Young's modulus so as to suppress the vibration following the rotation.

Disclosure of the Invention

The present inventors have made extensive studies to reveal the cause of the difficulty in keeping the stable flying height when the above-mentioned high speed rotation is attempted by the use of the conventional glass substrate (glass substrate for an information recording medium). As a result, it has been found out that, when the information recording medium is rotated at a high speed, the information recording medium is deformed due to resonance to make it difficult to keep the stable flying height. It has also been found out that, in order to prevent the deformation of the information recording medium due to resonance when the information recording medium is rotated at a high speed, it is preferred to increase the Young's modulus of the substrate for an information recording medium.

As the substrate for an information recording medium having a high Young's modulus, a crystallized glass substrate is known. In the crystallized glass substrate, however, the strength and the Young's modulus are controlled by its crystallinity. Therefore, in order to increase the strength and the Young's modulus, the ratio of crystals is increased. As a result, it is difficult to obtain the surface smoothness (the surface roughness Ra) required to the information recording medium. Thus, it is difficult to assure a stable flying height even if the high speed rotation is attempted by the use of the crystallized glass substrate.

The invention is defined in claim 1. Preferable features of the invention are defined in the dependent claims.

According to this invention, it is possible to obtain, by the use of a glass (amorphous glass), a substrate for an information recording medium adaptable to the above-mentioned high-speed rotation. The substrate for an information recording medium according to this invention can be classified into first through sixth aspects. Among those, the first through the fourth aspects are common in the Young's modulus and the liquidus temperature. The substrate for an information recording medium according to each of the first through the sixth aspects forms a first embodiment and can achieve the above-mentioned first object.

(1) A substrate (will be referred to as "a glass substrate I" hereinafter) for an information recording medium, comprising a glass substance having the Young's modulus not smaller than 100GPa and the liquidus temperature not higher than 1250 °C.

(2) A substrate (will be referred to as "a glass substrate II" hereinafter) for an information recording medium, comprising a glass substance, at least including $TiO_2$ and CaO as glass components, the contents of $TiO_2$ and CaO being selected so that the Young's modulus is not smaller than 100GPa and the liquidus temperature is not higher than 1250°C.

(3) A substrate (will be referred to as "a glass substrate III" hereinafter) for an information recording medium, comprising a glass substance at least including $TiO_2$ and CaO as glass components, the contents of $TiO_2$ and CaO being selected so that the Young's modulus is not smaller than 100GPa, the liquidus temperature is not higher than 1250 °C, and the viscosity is not smaller than 1Pa.s (10 poise) in a formable temperature range.

(4) A substrate (will be referred to as "a glass substrate IV" hereinafter) for an information recording medium, comprising a glass substance including, as glass components, $TiO_2$, CaO, MgO, and $Al_2O_3$ with at least $Li_2O$ of $Na_2O$ and $Li_2O$, the contents of the above-mentioned glass components being selected so that the Young's modulus is not smaller than 100GPa, the liquidus temperature is not higher than 1250 °C, the viscosity is not smaller than 10 poises in a formable temperature range, and the specific gravity is not greater than 3.5 g/cm$^3$.

(5) A substrate (will be referred to as "a glass substrate V" hereinafter) for an information recording medium, comprising a glass substance including as glass components 0.1-30 mol% of $TiO_2$, 1-45 mol% of CaO, 5-40 mol% of (MgO+CaO), 3-30 mol% of ($Na_2O$+$Li_2O$), O-less than 15 mol% of $Al_2O_3$, and 35-60 mol% of $SiO_2$.

(6) A substrate (will be referred to as "a glass substrate VI" hereinafter) for an information recording medium, which is obtained by chemically strengthening one of the above-mentioned glass substrates I through V or the glass substance thereof.

On the other hand, an information recording medium which is capable of achieving the above-mentioned second object comprises any one of the above-mentioned glass substrates I through VI and a recording layer formed on the glass substrate.

In this invention, it is also possible to obtain a substrate for an information recording medium according to each of seventh through ninth aspects which are different from the first through the sixth aspects. Specifically, the substrate for an information recording medium according to the seventh aspect essentially includes coexistence of $Y_2O_3$ and $TiO_2$ while the substrate for an information recording medium according to the eighth aspect includes coexistence of $TiO_2$, $Y_2O_3$, and $ZrO_2$. The substrate for an information recording medium according to the ninth aspect includes $TiO_2$ and at least one oxide selected from a group consisting of $Er_2O_3$, $Nd_2O_3$, $Sm_2O_3$, $Eu_2O_3$, $Gd_2O_3$, $Tb_2O_3$, $Dy_2O_3$, and $Yb_2O_3$. The substrate for an information recording medium according to each of the seventh through the ninth aspects forms a second embodiment of this invention.

The substrate for an information recording medium or the medium according to each of the first and the second embodiments has a glass transition point not higher than 650°C, preferably, not higher than 550 °C. The above-mentioned glass transition point is a comparatively low temperature.

Such a comparatively low glass transition point is effective in suppressing a damage during chemical strengthening. More specifically, upon the chemical strengthening, the glass substrate is typically immersed in fused salt. During the chemical strengthening, the fused salt is kept at a temperature 100-150 °C lower than the glass transition point of the glass substrate. However, the fused salt starts to decompose at a temperature not lower than 500 °C. The fused salt thus decomposed damages the surface of the glass substrate. Taking the above into consideration, it is desired that the glass transition point is not higher than 650 °C, preferably, not higher than 550 °C in order to prevent the damage on the glass substrate. Thus, in order to accomplish such a comparatively low glass transition point, alkali components such as $Na_2O$ and $Li_2O$ and alkaline earth components such as MgO and CaO are added.

Brief Description of the Drawing

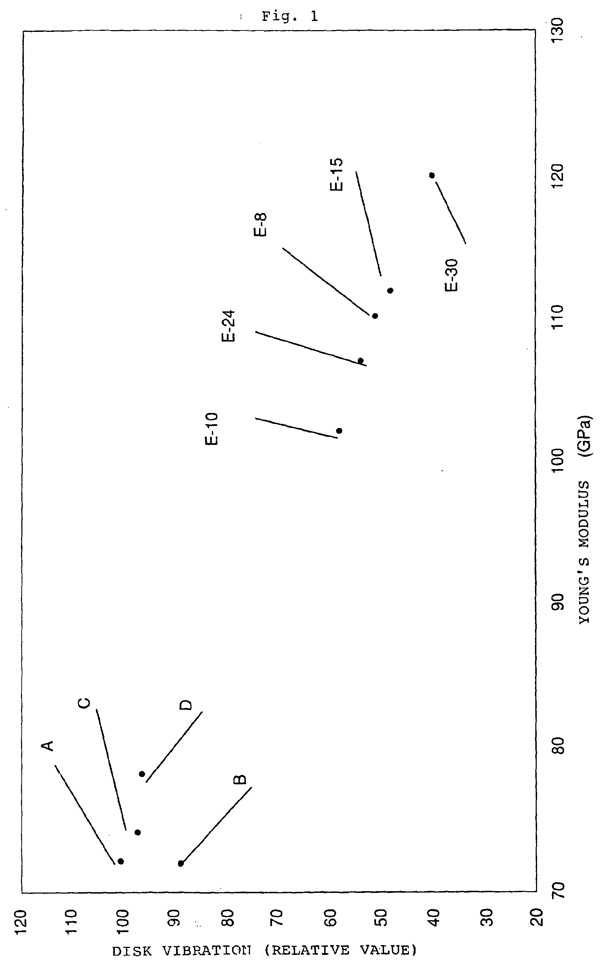

Fig. 1 shows the relationship between the Young's modulus and the vibration of a disk comprising an information recording medium.

Best Mode of Embodying the Invention

Description will now be made as regards an information recording medium and a substrate for an information recording medium according to a first embodiment of this invention.

At first, description will be made about the glass substrate I according to the first aspect in the first embodiment of this invention.

As described above, the glass substrate I of this invention comprises a glass substance having the Young's modulus not smaller than 100GPa and the liquidus temperature not higher than 1250°C. Herein, "the glass substrate" referred to in this invention means a substrate comprising a glass (amorphous glass) substance which is substantially free from crystal grains. Thus, the above-mentioned "glass" is essentially different from crystallized glass or glass ceramics containing crystal grains.

As described above, it is desired to increase the Young's modulus of the glass substrate in order to prevent the glass substrate from being deformed due to resonance when the glass substrate of a reduced thickness is rotated at a high speed. For example, consideration will be made about the case where a magnetic disk prepared from a glass substrate having the diameter of 8.9cm (3.5 inches) and the thickness of 0.635 mm (25 mil: this is a typical thickness for current magnetic disk substrates) is rotated at 10000rpm (hereinafter, the above-mentioned case will be referred to as "Case A"). In this case, in order that a stable flying height generally not greater than 1 $\mu$m is kept between the magnetic disk and the recording/reproducing head and that vibration during rotation can be suppressed, it is necessary that the Young's modulus of the glass substrate is not smaller than 100GPa.

Furthermore, in order to obtain the glass substrate specified in this invention, it is required that substantially no crystal is precipitated during the manufacturing process. To this end, various steps such as melting, forming, and cooling of the material performed in manufacturing of the glass substrate must be carried out at temperatures not lower than the liquidus temperature of the glass substance. Note that, if the liquidus temperature is extremely high, manufacture of the glass substrate itself is difficult so that the practicability is lost.

In view of the above, in the glass substrate I of this invention, the glass substance has the Young's modulus not smaller than 100GPa and the liquidus temperature not higher than 1250 °C. Preferably, the Young's modulus is not smaller than 105GPa. Preferably, the liquidus temperature is not higher than 1150 °C.

Even if the Young's modulus of the glass substrate or the glass substance is not smaller than 100GPa, deflection of the magnetic disk in the case A is liable to exceed 2 $\mu$m at maximum in case where the value (hereinafter called "a specific modulus") obtained by dividing the Young's modulus by the specific gravity of the glass substrate is not greater than about 30 x 10$^6$ Nm/kg. As a result, it is difficult to secure a stable flying height not greater than about 1 $\mu$m. In this connection, the specific gravity of the glass substrate I of this invention is preferably not greater than abuot 3.5g/cm$^3$, more preferably, not greater than 3.0g/cm$^3$. Although the specific gravity is desired to be as low as possible, silicate-based glass has a value substantially not smaller than 2.1g/cm$^3$.

Even if the liquidus temperature of the glass substance is not higher than 1250°C, various disadvantages will arise in case where the viscosity of the glass substance in a formable temperature range, namely, the viscosity in a temperature range not lower than the liquidus temperature is extremely low. Specifically, it is difficult to control the flow rate of glass melt supplied to the forming step in the manufacturing process of the glass substrate. In addition, the degree of freedom in a formable shape is decreased. Therefore, the viscosity of the glass substance for the glass substrate I of this invention is preferably not less than 1Pa.s (10 poise), more preferably, not less than 3Pa.s (30 poise).

In the meanwhile, when information is recorded in the information recording medium, such as a magnetic disk, an optical disk, and a magnetooptic disk, or when the information is reproduced from the information recording medium, the information recording medium is rotated while it is fixed by a clamp to a spindle of a drive motor arranged in the information processing apparatus. At this time, if a thermal expansion coefficient of the information recording medium is remarkably different from that of the clamp, the following problem will arise.

Specifically, when the information recording medium is rotated, the temperature of each of the information recording medium, the spindle, and the clamp is rapidly, increased, for example, up to about 90 °C due to heat generation by the drive motor. If the thermal expansion coefficients are much different between the information recording medium and the clamp, this will bring about loosening between the information recording medium and the clamp and distortion or deflection in the information recording medium when the temperature is increased as described above. As a result, the position of a data recording site (track) in the information recording medium is changed so that an error is liable to occur in information recording and reproducing operations. Particularly, the above-mentioned problem is serious in a large substrate such as a 8.9cm (3.5 inch) substrate.

Therefore, it is preferred that the thermal expansion coefficient of the glass substrate I of this invention is approximate to that of the clamp as nearly as possible. Since the above-mentioned clamp is typically made from a stainless alloy, the thermal expansion coefficient (The mean thermal expansion coefficient within a range between 100 and 300°C is meant. The same also applies in the following.) of the glass substrate I of this invention is preferably within a range between 7 and 14 ppm/°C (between 7 x $10^{-6}$ and 14 x $10^{-6}$/°C), more preferably, between 9 and 12 ppm/°C (between 9 x $10^{-6}$ and 12 x $10^{-6}$/°C).

Next, description will be made as regards the glass substrate II of this invention.

As described above, the glass substrate II of this invention comprises a glass substance at least including $TiO_2$ and CaO as glass components, the contents of $TiO_2$ and CaO being selected so that the Young's modulus is not smaller than 100GPa and the liquidus temperature is not higher than 1250°C.

The Young's modulus not smaller than 100GPa and the liquidus temperature not higher than 1250°C are selected for the glass substance of the glass substrate II because of the same reason as described in conjunction with the glass substrate I of this invention. The preferable ranges for these physical properties are similar to those described in conjunction with the glass substrate I of this invention.

In order to obtain a glass substance having a high Young's modulus, $TiO_2$ is preferably included as a glass component. In order to obtain a glass substance having a high Young's modulus and a low liquidus temperature, CaO is preferably included as a glass component.

Therefore, the glass substrate II of this invention is formed by the glass substance at least including $TiO_2$ and CaO as the glass components. The contents of $TiO_2$ and CaO are appropriately selected, depending upon the kinds and the contents of the other glass components, so as to obtain the glass substance having the Young's modulus not smaller than 100GPa and the liquidus temperature not higher than 1250°C.

Because of the same reason as described in conjunction with the glass substrate I of this invention, the specific gravity of the glass substrate II is preferably equal to about 3.5g/cm³ or less, more preferably, equal to about 3.0g/cm³ or less. Likewise, the thermal expansion coefficient of the glass substrate II preferably falls within a range generally between 7 and 14 ppm/°C (between 7 x $10^{-6}$ and 14 x $10^{-6}$/°C), more preferably, between 9 and 12 ppm/°C (between 9 x $10^{-6}$ and 12 x $10^{-6}$/°C).

Next, description will be made as regards the glass substrate III of this invention.

As described above, the glass substrate III of this invention comprises a glass substance at least including $TiO_2$ and CaO as glass components, the contents of $TiO_2$ and CaO being selected so that the Young's modulus is not smaller than 100GPa, the liquidus temperature is not higher than 1250 °C, and the viscosity in a formable temperature range is not smaller than 1Pa.s (10 poise).

The Young's modulus not smaller than 100GPa, the liquidus temperature not higher than 1250 °C, and the viscosity in the formable temperature range not smaller than 1Pa.s (10 poise) are selected for the glass substance forming the glass substrate III because of the same reason as described in conjunction with the glass substrate I of this invention. The preferable ranges for these physical properties are similar to those described in conjunction with the glass substrate I of this invention.

The glass substrate III is formed by the glass substance at least including $TiO_2$ and CaO because of the same reason as described in conjunction with the glass substrate II of this invention. The contents of $TiO_2$ and CaO are appropriately selected, depending upon the kinds and the contents of the other glass components, so as to obtain the glass substance having the Young's modulus not smaller than 100GPa, the liquidus temperature not higher than 1250°C, and the viscosity not smaller than 1Pa.s (10 poise) in the formable temperature range.

Because of the same reason as described in conjunction with the glass substrate I of this invention, the specific gravity of the glass substrate III is preferably equal to about 3.5g/cm³ or less, more preferably, about 3.0g/cm³ or less. Likewise, the thermal expansion coefficient of the glass substrate III preferably falls within a range generally between 7 and 14 ppm/°C (between 7 x $10^{-6}$ and 14 x $10^{-6}$/°C), more preferably, between 9 and 12 ppm/°C (between 9 x $10^{-6}$ and

12 x $10^{-6}$/°C).

Next, description will be made as regards the glass substrate IV of this invention.

As described above, the glass substrate IV of this invention comprises a glass substance at least including $TiO_2$, CaO, MgO, $Na_2O$, $Li_2O$, and $Al_2O_3$ as glass components, the contents of the above-mentioned glass components being selected so that the Young's modulus is not smaller than 100 GPa, the liquidus temperature is not higher than 1250°C, the viscosity in a formable temperature range is not smaller than 1Pa.s (10 poise), and the specific gravity is not greater than 3.5g/cm$^3$.

The Young's modulus not smaller than 100GPa, the liquidus temperature not higher than 1250°C, the viscosity in the formable temperature range not smaller than 1Pa.s (10 poise), and the specific gravity not greater than 3.5g/cm$^3$ are selected for the glass substance forming the glass substrate IV because of the same reason as described in conjunction with the glass substrate I of this invention. The preferable ranges for these physical properties are similar to those described in conjunction with the glass substrate I of this invention.

As described in conjunction with the glass substrate I of this invention, $TiO_2$ is a glass component effective in obtaining the glass substance having a high Young's modulus. CaO is a glass component effective in obtaining the glass substance having a high Young's modulus and a low liquidus temperature. It is noted that CaO has a function of increasing the specific gravity.

MgO is also a glass component effective in obtaining the glass substance having a high Young's modulus but has a function of increasing the liquidus temperature as compared with CaO. In addition, MgO has a function of reducing the specific gravity.

$Na_2O$ has a function of decreasing the Young's modulus but contributes to remarkable decrease of the liquidus temperature of the glass substance. Such decrease in liquidus temperature by presence of $Na_2O$ is further remarkable in case where $Na_2O$ and $TiO_2$ coexist. $Na_2O$ is also a glass component useful in obtaining the glass substance having a high thermal expansion coefficient.

$Li_2O$ is a glass component which is effective in improving the meltability of the glass substance without decreasing the Young's modulus, and which enables augmentation in strength by chemical strengthening.

$Al_2O_3$ is a glass component which does not contribute to increase or decrease in Young's modulus at all but is effective in decreasing the liquidus temperature of the glass substance, suppressing the phase separation tendency, and improving the viscosity in a working temperature range and the chemical strengthening characteristic.

Therefore, the glass substrate IV of this invention is formed by the glass substance at least including the above-mentioned six kinds of the glass components. The content of each of the above-mentioned glass components is appropriately selected, depending upon the kinds and the contents of the other glass components (including those except the above-mentioned six kinds of the glass components), so as to obtain the glass substance having the Young's modulus not smaller than 100GPa, the liquidus temperature not higher than 1250°C, the viscosity not smaller than 1Pa.s (10 poise) in the formable temperature range, and the specific gravity not greater than 3.5g/cm$^3$.

Because of the same reason as described in conjunction with the glass substrate I of this invention, the thermal expansion coefficient of the glass substrate IV preferably falls within a range generally between 7 and 14 ppm/°C (between 7 x $10^{-6}$ and 14 x $10^{-6}$/°C) more preferably, between 9 and 12 ppm/°C (between 9 x $10^{-6}$ and 12 x $10^{-6}$/°C)

The above-mentioned glass substrate IV has a glass transition point not higher than 650°C, preferably, not higher than 550°C. The glass transition point is a relatively low temperature. Generally, fused salt used in chemically strengthening the glass substance is held at a temperature 100 to 150°C lower than the glass transition point. On the other hand, the fused salt begins to decompose if the temperature reaches 500°C or more. This results in a damage on the surface of the glass substrate. In order to avoid the situation described above, the above-mentioned glass transition point is preferred.

Next, description will be made as regards the glass substrate V of this invention.

As described above, the glass substrate V of this invention comprises a glass substance including as glass components 0.1-30 mol% of $TiO_2$, 1-45 mol% of CaO, 5-40 mol% of (MgO+CaO), 3-30 mol% of ($Na_2O$+$Li_2O$), 0-15 mol% of $Al_2O_3$, and 35-65 mol% of $SiO_2$.

In the above-mentioned composition, the total amount of (CaO+MgO) preferably falls within a range between 5 and 35 mol%. In this case, the content of $SiO_2$ is preferably kept within the range exceeding 55 mol% but up to 65 mol% taking the water durability of the glass substance into consideration. Furthermore, the content of $Al_2O_3$ may be less than 5 mol%.

The glass substance having the above-mentioned composition easily achieves a Young's modulus not smaller than 100GPa, a liquidus temperature not higher than 1250°C, a viscosity not smaller than 1Pa.s (10 poise) within a formable temperature range, and a specific gravity not greater than 3.5g/cm$^3$.

As described above, $TiO_2$ is a glass component effective in obtaining the glass substance having a high Young's modulus. The content is preferably equal to 0.1 mol% or more in order to obtain the glass substance having a Young's modulus not smaller than 100GPa. However, if the content exceeds 30 mol%, devitrification resistance of the glass substance is decreased. This results in difficulty in obtaining the glass substance having a liquidus temperature not higher than 1250 C.

CaO is a glass component effective in obtaining the glass substance having a high Young's modulus and a low liquidus temperature. The content is preferably equal to 1 mol% or more in order to obtain the glass substance having the Young's modulus not smaller than 100 GPa and the liquidus temperature not higher than 1250 C. However, if the content exceeds 45 mol%, glass formation is difficult.

MgO is a glass component effective in obtaining the glass substance having a high Young's modulus and a low specific gravity. However, MgO has a function of increasing the liquidus temperature of the glass substance. Therefore, the content is preferably selected so that the total amount of MgO and CaO is between 5 and 40 mol%. Desirably, the amount of MgO falls within a range between 5 and 40 mol%. In any event, both of CaO and MgO are contained in the glass substrate according to each of the first through the fifth aspects.

$Na_2O$ is a glass component which has a function of reducing the Young's modulus but significantly decreases the liquidus temperature of the glass substance. Such a decrease in liquidus temperature by presence of $Na_2O$ is more and more remarkable in case where $Na_2O$ and $TiO_2$ coexist. Therefore, particularly when the content of $TiO_2$ is comparatively large (for example, not less than 5 mol%), it is preferred that $Na_2O$ is included. $Na_2O$ is also a glass component useful in obtaining the glass substance having a large thermal expansion coefficient. By appropriately selecting the content, the thermal expansion coefficient of the glass substance can be adjusted. On the other hand, $Li_2O$ is a glass component which is effective in improving the meltability of the glass substance without decreasing the Young's modulus, and which enables augmentation in strength by chemical strengthening. From the above-mentioned reasons, the total amount of $Na_2O$ and $Li_2O$ is preferably equal to 3 mol% or more. However, if the total amount of $Na_2O$ and $Li_2O$ exceeds 30 mol%, chemical durability of the glass substance is deteriorated. In this case, when an information recording medium is obtained by forming a magnetic recording layer on the glass substrate, alkali ions are often diffused from the glass substrate to the recording layer. Preferably, the total amount of $Na_2O$ and $Li_2O$ is between 5 and 22 mol%.

$Al_2O_3$ is not essential because it is a glass component which does not contribute to increase or decrease in Young's modulus, but may be contained if necessary because it is a glass component effective in decreasing the liquidus temperature of the glass substance, suppressing the phase separation tendency, and improving the viscosity in a working temperature range and the chemical strengthening characteristic. If $Al_2O_3$ is contained and the content exceeds 15 mol%, various problems would often arise, such as considerable increase in liquidus temperature and presence of unmelted materials resulting from deterioration in meltability.

$SiO_2$ is a component forming a glass structure. In order to obtain the glass substance having the liquidus temperature not higher than 1250°C, the content is preferably equal to 35 mol% or more. However, if the content exceeds 65 mol%, it is difficult to obtain the glass substance having the Young's modulus not smaller than 100GPa. More preferably, the content of $SiO_2$ is between 35 and 65 mol%. $SiO_2$ is a component having an influence upon dissolution of alkali ions. In view of the water durability, the content between 40 and 60 mol% is effective.

Because of the same reason as described in conjunction with the glass substrate I of this invention, the glass substrate V has the Young's modulus not smaller than 100GPa, the liquidus temperature not higher than 1250 °C, the viscosity not smaller than 1Pa.s (10 poise) in the formable temperature range, the specific gravity not greater than 3.5g/cm$^3$, and the thermal expansion coefficient generally between 7 and 14 ppm/°C (between 7 x 10$^{-6}$ and 14 x 10$^{-6}$/°C) . In order to obtain the glass substrate V having desired physical properties, the contents of the glass components are appropriately selected within the above-mentioned ranges. The preferable ranges for these physical properties are similar to those described in conjunction with the glass substrate I of this invention.

Preferably, the glass substrate V comprises the glass substance including as glass components 5-15 mol% of $TiO_2$, 4-20 mol% of CaO, 5-30 mol% of (MgO+CaO), 5-22 mol% of ($Na_2O+Li_2O$), 0-8 mol% of $Al_2O_3$, and 40-60 mol% of $SiO_2$.

In the foregoing, description has been made about the glass substrates I through V of this invention. It is noted here that, in each of the glass substrates comprising the glass substance including $TiO_2$ as an essential glass component, namely, in each of the glass substrates II, III, IV, and V, a part or a whole of $TiO_2$ may be replaced by transition metal oxide (except titanium oxide).

Such at least one metal oxide is at least one selected from a group consisting of oxides of Cr, Mn, Fe, Co, Ni, Ga, Ge, Y, Zr, Nb, Mo, La, Ce, Pr, Nd, Pn, Ev, Gd, Tb, Dy, Ho, Er, Tn, Yb, Hf, Ta, and W.

Alternatively, use may be made of at least one selected from a group consisting of oxides of Cu, V, and Zn, although the Young's modulus is slightly reduced as compared with the above-mentioned transition metal oxides.

Among the above-enumerated oxides, $Y_2O_3$ serves to increase the Young' modulus without an increase of the specific gravity. The content of such oxide falls within a range between 0.1 and 15 mol%, preferably, between 0.1 and 8 mol%. Preferably, the transition metal oxide coexists with $TiO_2$ of 10 mol% or less. This is because IMPROVEMENT IN YOUNG'S MODULUS/OXIDE CONTENT is slightly decreased if $TiO_2$ is more than 10 mol%.

It is noted here that the transition metal oxide mentioned above is not so effective in improving the Young's modulus of the glass substance but has a function of increasing the specific gravity. Therefore, the content is suitably selected, depending on the kinds and the contents of the other glass components, so that the desired glass substrate

is obtained. If $ZrO_2$ is used as the transition metal oxide, the content of $ZrO_2$ is preferably equal to 10 mol% or less, more preferably, 4 mol% or less. When the content of $ZrO_2$ used as the transition metal oxide is not greater than 5 mol%, the liquidus temperature can be slightly lowered.

Although the glass substrates I through V of this invention can be obtained without chemical strengthening, chemical strenghtening may be carried out. If the chemical strengthening (by means of low-temperature ion exchange) is carried out, the glass substance before chemical strengthening preferably includes, as glass components, at least 40 mol% of $(SiO_2+Al_2O_3)$, at least 3 mol% of $Li_2O$, at least 5 mol% of $(Na_2O+Li_2O)$, and at most 35 mol% of $(CaO+MgO)$.

In the above-mentioned case, the content of $SiO_2$ is preferably equal to 40 mol% or more in order to form a sufficient compressive stress layer by chemical strengthening. It is noted here that a part of $SiO_2$ can be replaced by $Al_2O_3$. Therefore, the total amount of $SiO_2$ and $Al_2O_3$ preferably falls within a range between 40 and 80 mol%. More preferably, the total amount of $SiO_2$ and $Al_2O_3$ is equal to 44 mol% or more.

$Li_2O$ and $Na_2O$ serve to introduce into the glass substance $Li^+$ ions and $Na^+$ ions required in chemical strengthening. In order to form the sufficient compressive stress layer, it is preferable that the content of $Li_2O$ is not smaller than 3 mol% and the total amount of $Na_2O$ and $Li_2O$ is not smaller than 5 mol%. In order to avoid dissolution of alkali ions from the glass substrate, the total amount of the alkali ions is preferably equal to 22 mol% or less.

On the other hand, CaO and MgO are the glass components effective in adjusting the Young's modulus, the liquidus temperature, and the viscosity in the formable temperature range of the glass substance. However, these components prevent the movement of the alkali ions during chemical strengthening. Therefore, in order to form the sufficient compressive stress layer, it is preferred that the total amount of CaO and MgO is not greater than 35 mol%.

Next, description will be made about the glass substrate VI of this invention.

As described above, the glass substrate VI of this invention is formed by chemically strengthening any one of the glass substrates I through V or by chemically strengthening the glass substance thereof.

Chemical strengthening is an effective measure in obtaining a glass substrate having high impact resistance. For example, chemical strengthening by the use of low-temperature ion exchange can be performed by dipping the glass substance to be chemically strengthened into a preselected fused salt which comprises carbonate or nitrate of potassium or sodium or a mixture thereof and which is held at a temperature 50-150°C lower than a transition point Tg of the glass substance to be chemically strengthened. On the other hand, the fused salt starts decomposition beyond 500°C to damage the glass substrate. Therefore, it is desired that the glass substrate has a glass transition point not higher than 650°C; preferably, not higher than 550°C.

The glass substrates I through VI of this invention described above are made from amorphous glass which has a high Young's modulus not smaller than 100GPa (glass substrates I through IV and VI) or can easily provide a Young's modulus not smaller than 100GPa (glass substrates V and VI) and which has a liquidus temperature not higher than 1250°C. Therefore, it is easy to obtain from these glass substrates an information recording medium which is adapted to high speed rotation.

The glass substrates I through VI of this invention having the above-mentioned advantages are particularly adapted for use as a substrate for a magnetic disk. In addition, these substrates are also suitable as a substrate for a magnetooptic disk or an optical disk.

Next, description will be made as regards an information recording medium of this invention.

As described above, the information recording medium of this invention comprises any one of the above-mentioned glass substrates I through VI and the recording layer formed on the glass substrate.

It is noted here that, in the information recording medium of this invention, "the recording layer formed on the glass substrate" means a layer which is formed on a surface of the glass substrate directly or via any desired layer and which has a single-layer structure or a multilayer structure. The material and the layer structure of the recording layer are appropriately selected so as to serve as a magnetic recording layer, a magnetooptic recording layer, an erasable recording layer, or a phase-variable recording layer in correspondence to the type of a desired information recording medium.

The above-mentioned information recording medium essentially comprises as a substrate any one of the above-mentioned glass substrates I through VI. In addition to the substrate and the recording layer, a protection layer and a lubrication layer may appropriately be formed in dependence upon the type of the desired information recording medium, like in the prior art. In dependence upon the type of the information recording medium, the recording layer may be interposed between two substrates. In the information recording medium of such a structure, it is essential to use any one of the glass substrates I through VI of this invention as at least one of the two substrates.

The information recording medium of this invention easily meets the increase in rotation speed since the substrate forming the information recording medium comprises any one of the above-mentioned glass substrates I through VI of this invention. As a result, it is easy to obtain a recording/reproducing apparatus having a high access speed (for example, an auxiliary memory unit used in a personal computer or a server-and-client system) if the information recording medium of this invention is used.

Examples

Now, description will be made as regards specific examples of this invention. Note that the present invention is not restricted by the following examples. For glass substrates obtained in the following examples, the thickness of the compressive stress layer and the physical properties of the glass substrates were obtained in the following manner.

1. Thickness of Compressive Stress Layer

Measurement was made by the use of the precision strainmeter (Babinet compensation) manufactured by Toshiba Glass K.K.

2. Physical Properties

(1) Young's Modulus

Each sample having a dimension of 20 x 20 x 100 mm was prepared. An ultrasonic wave of 5MHz is made to propagate through the sample to measure a velocity of longitudinal wave ($V_1$) and a velocity of transversal wave ($V_s$) by the use of the sing-around sound velocity measuring equipment (UVM-2 manufactured by Ultrasonic Engineering Co., Ltd.). Then, calculation was made by the following equation.

$$\text{Young's modulus} = (4G^2 - 3G \cdot V_1^2 \cdot \rho)/(G - V_1^2 \cdot \rho)$$

$$G = V_s^2 \cdot \rho$$

p: Specific Gravity ($g/cm^3$) of Sample.

(2) Specific Modulus

Calculation was made by dividing the Young's modulus of the sample by its specific gravity.

(3) Liquidus Temperature

The sample was put into a platinum container and was held in a temperature gradient furnace for thirty minutes. Thereafter, the surface and the interior of the sample were observed by an optical microscope for presence or absence of crystals. The liquidus temperature was defined as a lowest temperature at which no crystal was precipitated.

(4) Viscosity

Measurement was made over a range from the melting temperature to the liquidus temperature by the use of the rotary viscometer comprising a platinum container and a platinum rotor.

(5) Glass Transition Point (Tg)

For the sample having a dimension of 5mm$\phi$ x 20mm, measurement was made by the use of the thermomechanical analyzer (TMA8140) manufactured by Rigaku Corp. at a heating rate of +4°C/min. As a reference sample, $SiO_2$ was used.

(6) Thermal Expansion Coefficient

A mean coefficient of thermal expansion between 100°C and 300°C is meant. Measurement was performed simultaneously when the glass transition point was measured.

(7) Surface Roughness (Ra)

Measurement was made by the use of the AFM NanoScope 3A manufactured by Digital Instrument Corp.

Examples 1-30

In order to obtain glass substances having oxide compositions shown in Tables 1 through 5, glass materials, such as silicate powder, aluminum hydroxide, alumina, lithium carbonate, lithium sulfate, sodium carbonate, sodium nitrate, calcium carbonate, magnesium carbonate, magnesium oxide, titanium oxide, iron oxide, nickel oxide, yttrium oxide, lantern oxide, neodymium oxide, copper oxide, antimony oxide, and arsenious acid were appropriately weighted or measured to prepare a mixture of 100kg for each example.

Next, melted glass was prepared in the following manner by the use of an atmosphere-heating type semicontinuous melting equipment of platinum which comprises a melting furnace having an internal volume of 2 liters, a working tank connected to the melting furnace and having an internal volume of 30 liters with a stirrer, and a cylindrical outflow tube having an inner diameter between 5mm and 20mm and connected to the working tank. Specifically, the above-mentioned mixture was put in the melting furnace to be melted at a temperature between 1350°C and 1450°C and then stirred in the working tank to be clarified or refined. Thus, melted glass was obtained.

The melted glass thus obtained was made to flow out from the cylindrical outflow tube at a temperature slightly higher than the liquidus temperature to be received in a molding die (lower die) having a circular shape (diameter of 100mm) and made from cast iron. The melted glass was quickly pressed by an upper die made from cast iron and then annealed to obtain a disk-shaped object having a diameter of about 100mm and a thickness of 1mm. With the composition of this invention, the liquidus temperature is not higher than 1250 °C and the surface tension is high. Therefore, pressing was performed without any deformation due to spreading at the periphery. A glass substrate after pressing was excellent in reproducibility for the molding die and presence of bubbles at the periphery was not observed.

Thereafter, the above-mentioned disk-shaped object was subjected to a grinding process and a polishing process (using a cerium oxide polisher) to obtain a disk-shaped glass substrate having a dimension of 8,89cm (3.5 inches) $\phi$ x 0.635mm.

In each example excluding Examples 25 and 26, chemical strengthening was performed in the following manner to obtain a desired glass substrate.

At first, a salt mixture of $NaNO_3$ and $KNO_3$ at a weight ratio of 6 : 4 was prepared. The salt mixture was heated to a temperature 100°C lower than the glass transition point (Tg) of the glass substrate to be chemically strengthened and was melted to obtain fused salt. Then, the glass substrate to be chemically strengthened was dipped into the fused salt for nine hours. Thus, chemical strengthening was performed.

The thickness of the compressive stress layer in each glass substrate (excluding the glass substrates in Examples 25 and 26) thus obtained and the physical property of each glass substrate are shown in Tables 1 through 5. All of the Young's modulus, the specific modulus, the surface roughness (Ra), and the specific gravity were measured by the use of the glass samples after chemically strengthened (except for the glass substrates of Examples 25 and 26). On the other hand, the liquidus temperature, the viscosity, the glass transition point, and the thermal expansion coefficient were measured by the use of the glass samples which were not chemically strengthened.

Comparative Example 1

Glass materials were weighted so as to obtain a glass substance having a composition (in terms of mol%) substantially same as that described in Example 1 of Japanese Unexamined Patent Publication (JP-A) No. 1-167245. In the manner similar to Examples 1 through 30 described above, a glass substrate (before chemically strengthened) was obtained and thereafter chemically strengthened under the same condition as in Examples 1 through 30 to obtain a desired glass substrate.

For the glass substrate, the thickness of the compressive stress layer, the Young's modulus, the specific gravity, the specific modulus, and the glass transition point were obtained in the manner similar to Examples 1 through 30. These values are shown in Table 6.

Comparative Example 2

Glass materials were weighted so as to obtain a glass substance having a composition (in terms of mol %) substantially same as that described in Example 1 of Japanese Patent Publication (JP-B) No. 6-76224. In the manner similar to Examples 1 through 30 described above, a glass substrate (before chemically strengthened) was obtained and thereafter chemically strengthened under the same condition as in Examples 1 through 30 to obtain a desired glass substrate.

For the glass substrate, the thickness of the compressive stress layer, the Young's modulus, the specific gravity, the specific modulus, and the liquidus temperature were obtained in the manner similar to Examples 1 through 30. These values are shown in Table 6.

Comparative Example 3

Glass materials were weighted so as to obtain a glass substance having a composition (in terms of mol%) substantially same as that described in Example 1 (Glass of Composition 2) of Japanese Patent Publication (JP-B) No. 4-70262. In the manner similar to Examples 1 through 30 described above, a glass substrate (before chemically strengthened) was obtained and thereafter chemically strengthened under the same condition as in Examples 1 through 30 to obtain a desired glass substrate.

For the glass substrate, the thickness of the compressive stress layer, the Young's modulus, the specific gravity, the specific modulus, the thermal expansion coefficient, and the glass transition point were obtained in the manner similar to Examples 1 through 30. These values are shown in Table 6.

Comparative Example 4

Glass materials were weighted so as to obtain a glass substance having a composition (in terms of mol%) substantially same as that described in the claim of Japanese Unexamined Patent Publication (JP-A) No. 7-187711. A melt was obtained and subjected to heat treatment at the temperature and for the time period specified in the above-mentioned claim to obtain a crystallized glass. Thereafter, the crystallized glass was processed in the manner similar to Examples 1 through 30 to obtain a desired glass substrate.

For the glass substrate, the Young's modulus, the specific gravity, the specific modulus, and the surface roughness were obtained in the manner similar to Examples 1 through 30. These values are shown in Table 6.

As seen from Tables 1 through 5, each of the glass substrates obtained in Examples 1 through 30 has a high Young's modulus between 102 and 120 GPa and an excellent surface roughness (Ra) between 0.3 and 0.5nm (3 and 5 angstroms). The liquidus temperature of the glass substance as a material for each of these glass substrates is relatively low, specifically, between 1000 and 1230°C. Therefore, it is supposed that, if a magnetic disk is prepared by the use of any one of these glass substrates, a flying height can be stably kept at about 1 $\mu$m or less even during the high speed rotation.

On the other hand, each of the glass substrates obtained in Comparative Examples 1 through 3 has a low Young's modulus between 74 and 78 GPa. The crystallized glass substrate obtained in Comparative Example 4 has a surface roughness (Ra) as inferior as 2.5nm (25 angstroms). Therefore, it is supposed that, if a magnetic disk is prepared by the use of anyone of these glass substrates and the crystallized glass substrate, a stable flying height of about 1$\mu$m or less is difficult to keep during the high speed rotation.

As is obvious from Tables 1 through 5, it is understood that each of Examples 1 through 30 has a composition range specified by 35-65 mol% of $SiO_2$, 0-15 mol% of $Al_2O_3$, 3-30 mol% of ($Li_2O+Na_2O$), 1-45 mol% of CaO, 5-40 mol% of (MgO+CaO), and 0.1-30 mol% of $TiO_2$. Especially, it has been found out that the amount of (MgO+CaO) is preferably within a range between 5 and 35 mol% and that the amount of $SiO_2$ preferably falls within a range which exceeds 55 mol% and which does not exceed 65 mol%.

Examples 31 through 36

A magnetic disk was prepared in the following manner by the use of the glass substrate obtained in each of Examples 25 through 30.

At first, a texture was formed on a landing zone of each glass substrate by the use of a laser beam so as to prevent attraction between the magnetic head and the magnetic disk.

Subsequently, a Cr underlying layer, a CoPtCrTa magnetic layer, and a carbon protection layer were successively formed on a surface of the glass substrate which is provided with the texture. Thus, the magnetic disk was obtained.

Each magnetic disk thus prepared was mounted on a hard disk unit and rotated at 12000 rpm with the flying height kept at 1$\mu$m or less to be subjected to a recording/reproducing test by an MR head. As a result, in all of the magnetic disks, recording/reproducing operations could be normally carried out.

Next, description will be directed to the substrate for an information recording medium according to the second embodiment of this invention. The substrate for an information recording medium according to the second embodiment of this invention is based on each of the seventh through the ninth aspects of this invention. The glass substrate according to the seventh aspect, i.e., the substrate for an information recording medium includes coexistence of $Y_2O_3$ and $TiO_2$ to obtain the Young's modulus and the liquidus temperature mentioned above. This substrate will be referred to as a glass substrate I of the second embodiment. More specifically, the glass substrate I of the second embodiment includes $Y_2O_3$ and $TiO_2$ in addition to $SiO_2$, $Al_2O_3$, MgO and/or CaO, and $Li_2O$.

A glass substrate II according to the eighth aspect of this invention includes $Y_2O_3$, $TiO_2$, and $ZrO_2$ in addition to $SiO_2$, $Al_2O_3$, MgO and/or CaO, and $Li_2O$.

Moreover, a glass substrate III according to the ninth aspect of this invention includes $TiO_2$ and at least one oxide which is selected from a rare earth metal oxide group consisting of $Er_2O_3$, $Nd_2O_3$, $Sm_2O_3$, $Eu_2O_3$, $Gd_2O_3$, $Tb_2O_3$, $Dy_2O_3$, and $Yb_2O_3$. It has been found out that the glass substrate having a desired Young's modulus and a desired liquidus temperature can also be obtained by inclusion of only $TiO_2$ and $ZrO_2$ in a composition of $SiO_2$, $Al_2O_3$, MgO and/or CaO, and $Li_2O$. Herein, the glass substrate is called a glass substrate IV according to the second embodiment. The rare earth metal oxide mentioned above also serves to increase the Young's modulus like the transition metal oxide but is liable to increase the specific gravity. Taking this into consideration, it is effective that such rare earth metal oxide is contained in the amount between 0 and 10 mol%.

Table 7 shows Examples 1 through 48 for the above-mentioned glass substrates I, II, III, and IV. Among Examples 1 through 48 shown in Table 7, each of Examples 1, 2, 3, 4, 5, 9, 10, 11, 12, 13, 14, 15, 16, 17, 18, 19, 21, 22, 24, 25, 29, 36, 37, and 38 includes $Y_2O_3$, $TiO_2$, and $ZrO_2$ and corresponds to the glass substrate II of the second embodiment. On the other hand, each of Examples 6, 7, 8, 20, 23, 26, 27, 28, 30, 31, 32, 33, 34, 35, 39, and 40 includes $Y_2O_3$ and $TiO_2$ and corresponds to the glass substrate I of the second embodiment. Each of Examples 41 through 48 includes $TiO_2$ and rare earth metal oxide and corresponds to the glass substrate III of the second embodiment.

Next, reference will be made to Table 8. Table 8 shows Examples 49 to 63. These Examples are classified into the glass substrates I, II, III, and IV of the second embodiment. Specifically, each of Examples 49, 52, 53, 55, 58, 62, and 63 includes coexistence of $TiO_2$ and $Y_2O_3$ and thus is the glass substrate I of the second embodiment. On the other hand, each of Examples 50, 54, 55, 56, 57, and 59 includes $TiO_2$, $Y_2O_3$, and $ZrO_2$ and corresponds to the glass substrate II of the second embodiment. Each of Examples 61 and 62 including $TiO_2$ and $ZrO_2$ alone corresponds to the glass substrate IV of the second embodiment.

Table 8 shows the thickness of the compressive stress layer, the viscosity, the specific gravity, the liquidus temperature, the specific modulus, the Young's modulus, the glass transition point (Tg), the thermal expansion coefficient, and the surface roughness for each of Examples.

As is obvious from Tables 7 and 8, each of Examples 48 through 63 of the second embodiment comprises 45-65 mol% of $SiO_2$, 0-15 mol% of $Al_2O_3$, 4-20 mol% of $Li_2O$, 1-8 mol% of $Na_2O$, 3-30 mo% of ($Li_2O+Na_2O$), 0-21 mol% of CaO, 0-22 mol% of MgO, 4-40 mol% of (CaO+MgO), 0-16 mol% of $Y_2O_3$, 1-15 mol% of $TiO_2$, and 0-10 mol% of $ZrO_2$. Each of Examples 41 to 48 which do not contain $Y_2O_3$ comprises 5 mol% of at least one oxide selected from a rare earth metal oxide group consisting of $Er_2O_3$, $Nd_2O_3$, $Sm_2O_3$, $Eu_2O_3$, $Gd_2O_3$, $Tb_2O_3$, $Dy_2O_3$, and $Yb_2O_3$.

Furthermore, each of the glass substrates according to the first and the second embodiments was immersed in water in order to measure the amount of dissolution of alkali ions. Table 9 shows the amounts of dissolution per 2.5-inch disk and per unit area for each of Examples 2, 4, 29, 9, 3, and 17 of the first embodiment and Examples 49 and 50 of the second embodiment. As is obvious from Table 9, Examples 9, 13, and 17 are smaller in amount of dissolution than in Examples 2, 4, and 29. The same also applies to Examples 49 and 50. This means that the amount of dissolution tends to decrease with an increase of the amount of $SiO_2$.

As seen from Tables 7 and 8, each of Examples 1 through 63 of the second embodiment has the Young's modulus not smaller than 100GPa and the liquidus temperature not higher than 1250 °C.

Furthermore, each of Examples 16, 17, 20, 23, and 31 of the second embodiment was chemically strengthened in a predetermined treating bath at a preselected ion exchange temperature. For each glass substrate chemically strengthened, measurement was made of the Young's modulus, the glass transition point (Tg), the surface roughness, and the bending strength. The results are tabulated in Table 10.

Finally referring to Fig. 1, description will be made about the correlation between the Young's modulus and the vibration of the information recording medium, i.e., the disk. Herein, illustration is made about the disks using the conventional substrates and the disks using the information recording substrates of this invention. More specifically, the disk A comprises an aluminum substrate. The disk B comprises an $SiO_2$ substrate. The disks C and D comprise the substrates in Comparative Examples 1 and 2 mentioned above, respectively. Each of these disks A, B, C, and D has the Young's modulus not greater than 80 GPa.

On the other hand, those substrates in Examples 8, 10, 15, 24, and 30 shown in Tables 2 through 5 were used as the information recording substrates of this invention. By the use of these substrates, the disks E8, 10, 15, 24, and 30 were formed.

Each of the above-mentioned substrates had a diameter of 3.5 inches and was rotated at a speed of 10,000 rpm. Then, a relative value of vibration was measured. In the figure, the vibration of the disk A among the conventional disks is represented as 100 while the vibration of other disks is given as the relative values. As illustrated in the figure, the vibration of each of the disks E8, 10, 15, 24, and 30 in Examples of this invention having the Young's modulus not smaller than 100 GPa (Examples 8, 10, 15, 24, and 30 in Tables 2 through 5) can be reduced to 60% or less as compared with the typical conventional disk formed by the aluminum substrate (A), as illustrated in Fig. 1. It will be understood that each of the disks B, C, and D comprising the other conventional substrates exhibits the vibration on the order or 90% with respect to the vibration of the disk A as 100. Thus, the substrate for an information recording medium according to this invention has a high Young's modulus and, when the disk is formed therefrom, can suppress the vibration so that the flying height can be stabilized.

Industrial Applicability

As described above, with the substrate (glass substrate) of this invention, it is possible to obtain the information recording medium which can readily meet the increase in rotation speed. Thus, the recording/reproducing apparatus having a high recording capacity and a high access speed can be obtained by the use of the information recording medium comprising the substrate according to this invention.

Table 1

| | | Example 1 | Example 2 | Example 3 | Example 4 | Example 5 | Example 6 |
|---|---|---|---|---|---|---|---|
| Glass Composition (mol%) | $SiO_2$ | 50 | 42 | 46 | 35 | 42 | 40 |
| | $Al_2O_3$ | 8 | 2 | - | 8 | 6 | 10 |
| | $Li_2O$ | 6 | 5 | 6 | 4 | 4 | 2 |
| | $Na_2O$ | - | 5 | 4 | 6 | 8 | 7 |
| | $Li_2O+Na_2O$ | 6 | 10 | 10 | 10 | 12 | 9 |
| | CaO | 15 | 13 | 20 | 18 | 8 | 12 |
| | MgO | 15 | 10 | 10 | 12 | 2 | 12 |
| | CaO+MgO | 30 | 23 | 30 | 30 | 10 | 24 |
| | $TiO_2$ | 6 | 23 | 14 | 15 | 30 | 15 |
| | Other Components | | | | $Fe_2O_3$: 2 | | $YO_3$: 2 |
| Thickness of Compressive Stress Layer ($\mu$m) | | 40 | 55 | 75 | 20 | 65 | 40 |
| Physical Properties | Young's Modulus (GPa) | 104 | 113 | 110 | 104 | 104 | 103 |
| | Specific Gravity (g/cm$^3$) | 2.75 | 3.10 | 2.90 | 2.96 | 2.95 | 2.91 |
| | Specific Modulus (x10$^6$Nm/kg) | 37.8 | 36.5 | 37.9 | 35.2 | 35.3 | 35.4 |
| | Liquidus Temperature (°C) | 1120 | 1180 | 1150 | 1180 | 1210 | 1180 |
| | Viscosity at 1200°C (Pa.s) | 1 | 2 | 3 | 2 | 3 | 4 |
| | Viscosity at 1100°C (Pa.s) | 5 | - | - | - | - | - |
| | Viscosity at 1250°C (Pa.s) | - | - | - | - | - | - |
| | Thermal Expansion Coefficient (ppm/°C) | 7.0 | 8.6 | 9.1 | 9.3 | 8.4 | 8.4 |
| | Glass Transition Point (Tg:°C) | 620 | 616 | 575 | 610 | 650 | 645 |

(continued)

|  |  | Example 1 | Example 2 | Example 3 | Example 4 | Example 5 | Example 6 |
|---|---|---|---|---|---|---|---|
|  | Surface Roughness (Ra-nm) | 0.3 | 0.3 | 0.4 | 0.4 | 0.3 | 0.4 |

Table 2

| | | Example 7 | Example 8 | Example 9 | Example 10 | Example 11 | Example 12 |
|---|---|---|---|---|---|---|---|
| Glass Composition (mol%) | $SiO_2$ | 40 | 48 | 60 | 42 | 50 | 40 |
| | $Al_2O_3$ | 2 | - | - | - | 3 | 4 |
| | $Li_2O$ | 6 | 18 | 6 | 12 | 10 | 2 |
| | $Na_2O$ | 2 | - | 3 | 18 | 5 | 3 |
| | $Li_2O+Na_2O$ | 8 | 18 | 9 | 30 | 15 | 5 |
| | CaO | 15 | 20 | 9 | 1 | 8 | 45 |
| | MgO | 30 | - | 9 | 13 | 10 | - |
| | CaO+MgO | 45 | 20 | 18 | 14 | 18 | 45 |
| | $TiO_2$ | 5 | 7 | 11 | 14 | 12 | 6 |
| | Other Components | | $ZrO_2$: 4<br><br>$Nb_2O_3$: 2<br>$La_2O_3$: 1 | $ZrO_2$:2 | | NiO: 2 | |
| Thickness of Compressive Stress Layer ($\mu$m) | | 20 | 40 | 70 | 40 | 80 | 30 |
| Physical Properties | Young's Modulus (GPa) | 115 | 110 | 102 | 102 | 104 | 109 |
| | Specific Gravity (g/cm$^3$) | 2.88 | 3.00 | 2.79 | 2.76 | 2.77 | 2.99 |
| | Specific Modulus (x10$^6$Nm/kg) | 40.0 | 36.7 | 36.6 | 37.0 | 37.6 | 36.5 |
| | Liquidus Temperature (°C) | 1150 | 1000 | 1080 | 1190 | 1150 | 1090 |
| | Viscosity at 1200°C (Pa.s) | 2 | 0.5 | 4 | 2 | 1 | 2 |
| | Viscosity at 1100°C (Pa.s) - | - | 1.5 | 8 | - | - | - |
| | Viscosity at 1250°C (Pa.s) | - | - | - | - | - | - |

(continued)

|  |  | Example 7 | Example 8 | Example 9 | Example 10 | Example 11 | Example 12 |
|---|---|---|---|---|---|---|---|
|  | Thermal Expansion Coefficient (ppm/°C) | 9.0 | 9.5 | 7.3 | 13.7 | 9.2 | 9.6 |
|  | Glass Transition Point (Tg:°C) | 570 | 535 | 605 | 420 | 537 | 595 |
|  | Surface Roughness (Ra-nm) | 0.4 | 0.3 | 0.3 | 0.4 | 0.3 | 0.3 |

Table 3

|  |  | Example 13 | Example 14 | Example 15 | Example 16 | Example 17 | Example 18 |
|---|---|---|---|---|---|---|---|
| Glass Composition (mol%) | SiO | 54 | 44 | 45 | 42 | 46 | 44 |
|  | AlO3 | - | 2 | 2 | - | - | - |
|  | Li2O | 12 | 9 | 10 | 4 | 4 | 4 |
|  | Na2 | 8 | 4 | 3 | 5 | 6 | 5 |
|  | Li2O+Na2O | 20 | 13 | 13 | 9 | 10 | 9 |
|  | CaO | 2 | 14 | 13 | 15 | 15 | 14 |
|  | MgO | 8 | 14 | 13 | 15 | 13 | 14 |
|  | CaO+MgO | 10 | 28 | 26 | 30 | 28 | 28 |
|  | TiO2 | 16 | 13 | 14 | 15 | 12 | 15 |
|  | Other Components |  |  |  | Nb2O5:2 La2O3: 2 | Nd2O3: 2 ZrO2:2 | CuO: 2 ZrO2:2 |
| Thickness of Compressive Stress Layer ($\mu$m) |  | 40 | 65 | 40 | 25 | 40 | 30 |
|  | Young's Modulus (GPa) | 102 | 109 | 111 | 112 | 102 | 110 |
|  | Specific Gravity (g/cm$^3$) | 2.73 | 2.87 | 2.86 | 3.22 | 2.73 | 3.00 |
|  | Specific Modulus (x10$^6$Nm/kg) | 37.4 | 38.0 | 38.9 | 34.9 | 37.4 | 36.7 |
|  | Liquidus Temperature (°C) | 1200 | 1020 | 1080 | 1150 | 1200 | 1180 |
|  | Viscosity at 1200°C (Pa.s) | 2 | 1 | 3 | 2 | 1.5 | 3 |

(continued)

|  |  | Example 13 | Example 14 | Example 15 | Example 16 | Example 17 | Example 18 |
|---|---|---|---|---|---|---|---|
| Physical Properties | Viscosity at 1100°C (Pa. s) | - | 3 | - | - | - | - |
|  | Viscosity at 1250°C (Pa.s) | - | - | - | - | - | - |
|  | Thermal Expansion Coefficient (ppm/°C) | 9.8 | 8.4 | 8.4 | 9.1 | 9.8 | 8.9 |
|  | Glass Transition Point (Tg:°C) | 505 | 650 | 645 | 600 | 505 | 605 |
|  | Surface Roughness (Ra -nm) | 0.3 | 0.4 | 0.3 | 0.4 | 0.4 | 0.3 |

Table 4

|  |  | Example 19 | Example 20 | Example 21 | Example 22 | Example 23 | Example 24 |
|---|---|---|---|---|---|---|---|
| Glass Composition (mol%) | SiO2 | 40 | 45 | 45 | 44 | 45 | 44 |
|  | Al2O3 | - | 2 | 2 | 2 | 1 | 2 |
|  | Li2O | 4 | 10 | 10 | 10 | 12 | 13 |
|  | Na2O | - | 3 | 2 | 4 | 5 | 5 |
|  | Li2O+Na2O | 4 | 13 | 12 | 14 | 17 | 18 |
|  | CaO | 36 | 11 | 10 | 14 | 13 | 13 |
|  | MgO | - | 15 | 15 | 15 | 13 | 12 |
|  | CaO+MgO | 36 | 26 | 25 | 29 | 26 | 25 |
|  | TiO2 | 8 | 14 | 14 | 11 | 11 | 11 |
|  | Other Components | La2O3:1 ZrO2:5 Nb2O5: 6 |  | ZrO2: 2 |  |  |  |
| Thickness of Compressive Stress Layer ($\mu$m) |  | 10 | 40 | 40 | 50 | 60 | 60 |
|  | Young's Modulus (GPa) | 115 | 110 | 111 | 109 | 108 | 107 |
|  | Specific Gravity (g/cm$^3$) | 3.51 | 2.86 | 2.92 | 2.86 | 2.83 | 2.82 |

(continued)

| | | Example 19 | Example 20 | Example 21 | Example 22 | Example 23 | Example 24 |
|---|---|---|---|---|---|---|---|
| Physical Properties | Specific Modulus (x10$^6$Nm/kg) | 32.8 | 38.5 | 38.1 | 38.1 | 38.1 | 37.8 |
| | Liquidus Temperature (°C) | 1200 | 1100 | 1100 | 1070 | 1080 | 1050 |
| | Viscosity at 1200°C (Pa.s) | 2 | 1 | 2 | 1 | 1 | <1 |
| | Viscosity at 1100°C (Pa.s) | - | 3 | 4 | 2 | 2 | 1 |
| | Viscosity at 1250°C (Pa.s) | - | - | - | - | - | - |
| | Thermal Expansion Coefficient (ppm/°C) | 8.9 | 9.3 | 9.4 | 10.1 | 10.7 | 11.0 |
| | Glass Transition Point (Tg:°C) | 670 | 560 | 565 | 540 | 530 | 520 |
| | Surface Roughness (Ra -nm) | 0.4 | 0.3 | 0 . 3 | 0.4 | 0.3 | 0.4 |

Table 5

| | | Example 25 | Example 26 | Example 27 | Example 28 | Example 29 | Example 30 |
|---|---|---|---|---|---|---|---|
| Glass Composition (mol%) | SiO2 | 30 | 46 | 46 | 45 | 37 | 38 |
| | Al2O3 | - | - | 2 | 4 | 2 | |
| | Li2O | 5 | 8 | 10 | 7 | 4 | 9 |
| | Na2O | - | - | 3 | 4 | 2 | 2 |
| | Li2O+Na2O | 5 | 8 | 13 | 11 | 6 | 11 |
| | CaO | 33 | 7 | 9 | 13 | 19 | 14 |
| | MgO | - | - | 17 | 13 | 24 | 15 |
| | CaO+MgO | 33 | 7 | 26 | 26 | 44 | 29 |
| | Ti02 | 10 | 7 | 13 | 14 | 14 | 16 |
| | Other Components | La2O3: 1<br><br>ZrO2:6<br>Nb2O3: 6 | La2O3: 7<br><br>ZrO2:2<br>ZnO: 23 | | | | ZrO2:4 |

(continued)

|  |  | Example 25 | Example 26 | Example 27 | Example 28 | Example 29 | Example 30 |
|---|---|---|---|---|---|---|---|
| Thickness of Compressive Stress Layer ($\mu$m) |  | - | - | 50 | 70 | 15 | 20 |
| Physical Properties | Young's Modulus (GPa) | 116 | 108 | 110 | 108 | 118 | 120 |
|  | Specific Gravity (g/cm$^3$) | 3.53 | 3.93 | 2.88 | 2.86 | 3.05 | 3.05 |
|  | Specific Modulus (x10$^6$Nm/kg) | 32.9 | 27.5 | 38.1 | 37.8 | 38.8 | 39.5 |
|  | Liquidus Temperature (°C) | 1220 | 1230 | 1100 | 1100 | 1230 | 1230 |
|  | Viscosity at 1200°C (Pa.s) | <1 | - | 2 | 3 | - | - |
|  | Viscosity at 1100°C (Pa.s) | - | - | - | 8 | - | - |
|  | Viscosity at 1250°C (Pa.s) | - | <1 | - | - | 1 | 2 |
|  | Thermal Expansion Coefficient (ppm/°C) | 8.9 | 7.9 | 9.4 | 8.7 | 8.8 | 9.1 |
|  | Glass Transition Point (Tg:°C) | 660 | 580 | 560 | 580 | 537 | 595 |
|  | Surface Roughness (Ra -nm) | 0.4 | 0.4 | 0.3 | 0.3 | 0.5 | 0.4 |

Table 6

|  |  | Comparative Example 1 | Comparative Example 2 | Comparative Example 3 | Comparative Example 4 |
|---|---|---|---|---|---|
|  | SiO2 | 64.2 | 68.5 | 67.2 | 52.0 |
|  | Al2O3 | 7.6 | 8.8 | 1.8 | 1.0 |
|  | Li20 | - | 10.0 | - | - |
|  | Na20 | 14.5 | 8.2 | 9.4 | 7.0 |
|  | K2O | 2.0 | - | 6.2 | 5.0 |
|  | CaO | - | - | 0.1 | 16.0 |
|  | MgO | 6.4 | 4.5 | 4.5 | - |

(continued)

| | | Comparative Example 1 | Comparative Example 2 | Comparative Example 3 | Comparative Example 4 |
|---|---|---|---|---|---|
| Glass Composition (mol%) | BaO | 0.2 | - | - | - |
| | $TiO_2$ | 4.0 | - | 0.5 | - |
| | $ZrO_2$ | 1.0 | - | - | - |
| | ZnO | - | - | 9.1 | - |
| | B2O3 | - | - | 1.0 | - |
| | As2O3 | - | - | 0.07 | - |
| | Sb2O3 | - | - | 0.07 | - |
| | F | - | - | - | 19.0 |
| Thickness of Compressive Stress Layer ($\mu$m) | | 75 | 270 | 85 | - |
| Physical Properties | Young's Modulus (GPa) | 74 | 78 | 76 | 93 |
| | Specific Gravity (g/cm$^3$) | 2.56 | 2.43 | 2.41 | 2.60 |
| | Specific Modulus (x10$^6$Nm/kg) | 29.1 | 31.9 | 31.3 | 35.0 |
| | Liquidus Temperature (°C) | - | 960 | - - | - |
| | Thermal Expansion Coefficient (ppm/°C) | - | - | 9.6 | - |
| | Glass Transition Point (Tg:°C) | 626 | - | 555 | - |
| | Surface Roughness (Ra-nm) | - | - | - | 2.5 |

Table 7-1 GLASS COMPOSITIONS OF EXAMPLES AND COMPARATIVE EXAMPLES (mol%)

| | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| SiO2 | 55.0 | 55.0 | 55.0 | 55.0 | 54.0 | 55.0 | 55.0 | 53.0 | 53.0 | 52.0 | 52.0 | 52.0 | 52.0 | 52.0 |
| Al2O3 | 7.0 | 7.0 | 7.0 | 9.0 | 5.0 | 6.0 | 7.0 | 6.0 | 6.0 | 5.0 | 5.0 | 5.0 | 7.0 | 6.5 |
| MgO | 10.0 | 14.0 | 18.0 | 13.0 | 20.0 | 20.0 | 18.0 | 16.0 | 16.0 | 12.0 | 14.0 | 12.0 | 10.0 | 8.0 |
| CaO | 8.0 | 4.0 | | | | | | 4.0 | | 8.0 | 8.0 | 8.0 | 8.0 | 12.0 |
| SrO | | | | | | | | | | | | | | |
| BaO | | | | | | | | | | | | | | |
| ZnO | | | | | | | | | 4.0 | | | | | |
| Li2O | 10.0 | 10.0 | 10.0 | 13.0 | 10.0 | 10.0 | 10.0 | 10.0 | 10.0 | 10.0 | 8.0 | 10.0 | 10.0 | 10.0 |
| Na2O | | | | | | | | | | | | | | |
| Y2O3 | 2.0 | 2.0 | 2.0 | 2.0 | 2.0 | 2.0 | 3.0 | 2.0 | 3.0 | 3.0 | 3.0 | 2.0 | 3.0 | 2.5 |
| TiO2 | 5.5 | 5.5 | 5.5 | 5.0 | 7.0 | 7.0 | 7.0 | 6.0 | 6.0 | 8.0 | 8.0 | 7.0 | 6.0 | 7.0 |
| ZrO2 | 2.5 | 2.5 | 2.5 | 3.0 | 2.0 | | | | 2.0 | 2.0 | 2.0 | 2.0 | 2.0 | 2.0 |
| CeO2 | | | | | | | | | | | | 2.0 | 2.0 | |
| Liquidus Temperature (°C) | 1232 | 1242 | 1247 | 1210 | 1243 | 1238 | 1204 | 1228 | 1244 | 1237 | 1231 | 1211 | 1220 | 1217 |
| Young's Modulus (Gpa) | 106.5 | 106.7 | 106.3 | 104.0 | 108.7 | 105.6 | 106.1 | 111.0 | 109.7 | 112.1 | 112.6 | 111.2 | 110.9 | 109.7 |
| Tg (°C) | 608 | 615 | 626 | 581 | 616 | 612 | 618 | 615 | 609 | 609 | 626 | 601 | 612 | 608 |
| Surface Roughness (Ra-nm) | 0.3 | 0.3 | 0.3 | 0.3 | 0.3 | 0.3 | 0.3 | 0.3 | 0.3 | 0.3 | 0.3 | 0.3 | 0.3 | 0.3 |

EP 0 917 135 B1

## Table 7-2 GLASS COMPOSITIONS OF EXAMPLES AND COMPARATIVE EXAMPLES (mol%)

| | Example | | | | | | | | | | | | | |
|---|---|---|---|---|---|---|---|---|---|---|---|---|---|---|
| | 15 | 16 | 17 | 18 | 19 | 20 | 21 | 22 | 23 | 24 | 25 | 26 | 27 | 28 |
| $SiO_2$ | 50.0 | 50.0 | 52.0 | 52.0 | 52.0 | 52.0 | 50.0 | 52.0 | 52.0 | 52.0 | 52.0 | 52.0 | 52.0 | 52.0 |
| $Al_2O_3$ | 8.0 | 8.0 | 5.5 | 5.5 | 5.0 | 6.0 | 6.5 | 5.3 | 5.5 | 5.5 | 5.5 | 6.0 | 6.0 | 5.0 |
| $MgO$ | 8.0 | 8.0 | 7.0 | 10.5 | 10.0 | 11.0 | 10.0 | 7.0 | 7.0 | 4.0 | 7.0 | 7.5 | 7.0 | 5.0 |
| $CaO$ | 12.0 | 14.0 | 14.0 | 10.5 | 10.0 | 11.0 | 10.0 | 12.0 | 15.0 | 17.0 | 12.0 | 12.0 | 10.0 | 10.0 |
| $SrO$ | | | | | | | | | 2.0 | | | | | 8.0 |
| $BaO$ | | | | | | | 2.0 | | | | | | | |
| $ZnO$ | | | | | | | | | | | | | 5.0 | |
| $Li_2O$ | 8.0 | 10.0 | 10.0 | 10.0 | 12.0 | 10.0 | 10.0 | 10.0 | 10.0 | 10.0 | 12.0 | 12.0 | 10.0 | 10.0 |
| $Na_2O$ | 2.5 | | | | | | | | | | | | | |
| $Y_2O_3$ | 2.5 | 2.0 | 2.5 | 2.5 | 2.5 | 3.0 | 2.5 | 2.7 | 3.5 | 2.5 | 2.5 | 3.5 | 3.0 | 3.0 |
| $TiO_2$ | 7.0 | 6.0 | 7.0 | 7.0 | 6.5 | 7.0 | 7.0 | 7.0 | 7.0 | 7.0 | 7.0 | 7.0 | 7.0 | 7.0 |
| $ZrO_2$ | 2.0 | 2.0 | 2.0 | 2.0 | 2.0 | | 2.0 | 2.0 | | 2.0 | 2.0 | | | |
| $CeO_2$ | | | | | | | | | | | | | | |
| Liquidus Temperature (°C) | 1241 | 1211 | 1188 | 1212 | 1190 | 1153 | 1226 | 1187 | 1144 | 1158 | 1187 | 1172 | 1158 | 1094 |
| Young's Modulus (Gpa) | 108.3 | 109.8 | 110.2 | 111.0 | 111.1 | 110.0 | 110.3 | 110.1 | 110.3 | 109.4 | 109.9 | 109.7 | 108.8 | 107.7 |
| Tg (°C) | 600 | 607 | 607 | 606 | 590 | 598 | 606 | 605 | 603 | 608 | 592 | 588 | 587 | 593 |
| Surface Roughness (Ra-nm) | 0.3 | 0.3 | 0.3 | 0.3 | 0.3 | 0.3 | 0.3 | 0.3 | 0.3 | 0.3 | 0.3 | 0.3 | 0.3 | 0.3 |

Table 7-3 GLASS COMPOSITIONS OF EXAMPLES AND COMPARATIVE EXAMPLES (mol%)

| | Example | | | | | | | | | | | | |
|---|---|---|---|---|---|---|---|---|---|---|---|---|---|
| | 29 | 30 | 31 | 32 | 33 | 34 | 35 | 36 | 37 | 38 | 39 | 40 | 41 |
| SiO2 | 52.0 | 58.0 | 52.0 | 52.0 | 52.0 | 60.0 | 52.0 | 52.0 | 52.0 | 52.0 | 52.0 | 52.0 | 52.0 |
| Al2O3 | 5.5 | 6.0 | 5.0 | 5.0 | 5.0 | 4.0 | 5.0 | 5.5 | 5.5 | 5.5 | 5.5 | 5.0 | 5.0 |
| MgO | | 6.0 | 10.0 | 8.5 | 8.5 | 4.5 | 7.0 | 4.0 | 4.0 | 4.0 | 10.0 | 8.5 | 10.5 |
| CaO | 21.0 | 8.0 | 10.0 | 9.0 | 9.0 | 4.5 | 7.5 | | | | 10.0 | 9.0 | 10.5 |
| SrO | | | | | | | | 6.0 | 17.0 | | | | |
| BaO | | | | | | | | | | 17.0 | | | |
| ZnO | | | | | | | | | | | 17.0 | | |
| Li2O | 10.0 | 12.0 | 12.5 | 12.5 | 15.0 | 12.0 | 12.5 | 10.0 | 10.0 | 10.0 | 7.5 | 7.5 | 10.0 |
| Na2O | | | | | | | | | | | 5.0 | 7.5 | |
| Y2O3 | 2.5 | 2.0 | 3.0 | 3.0 | 3.0 | 8.0 | 3.0 | 2.5 | 2.5 | 2.5 | 3.0 | 3.0 | |
| TiO2 | 7.5 | 8.0 | 7.5 | 10.0 | 7.5 | 7.0 | 7.0 | 7.0 | 7.0 | 7.0 | 7.0 | 7.0 | 7.0 |
| ZrO2 | 2.0 | | | | | | | | 2.0 | 2.0 | 2.0 | | |
| Er2O3 | | | | | | | | | | | | | 5.0 |
| Liquidus Temperature (°C) | 1126 | 1056 | 1103 | 1174 | 1096 | 1143 | 1065 | 1084 | 1032 | 1075 | 1091 | 1043 | 1101 |
| Young's Modulus (Gpa) | 109.1 | 103.5 | 110.5 | 110.3 | 106.6 | 106.7 | 108.2 | 106.2 | 103.3 | 105.1 | 105.2 | 102.1 | 110.4 |
| Tg (°C) | 602 | 565 | 580 | 582 | 560 | 623 | 576 | 572 | 569 | 569 | 569 | 542 | 603 |
| Surface Roughness (Ra-nm) | 0.3 | 0.3 | 0.3 | 0.3 | 0.3 | 0.3 | 0.3 | 0.3 | 0.3 | 0.3 | 0.3 | 0.3 | 0.3 |

EP 0 917 135 B1

Table 7-4 GLASS COMPOSITIONS OF EXAMPLES AND COMPARATIVE EXAMPLES (mol%)

| | Example | | | | | | |
|---|---|---|---|---|---|---|---|
| | 42 | 43 | 44 | 45 | 46 | 47 | 48 |
| SiO2 | 52.0 | 52.0 | 52.0 | 52.0 | 52.0 | 52.0 | 52.0 |
| Al2O3 | 5.0 | 5.0 | 5.0 | 5.0 | 5.0 | 5.0 | 5.0 |
| MgO | 10.5 | 10.5 | 10.5 | 10.5 | 10.5 | 10.5 | 10.5 |
| CaO | 10.5 | 10.5 | 10.5 | 10.5 | 10.5 | 10.5 | 10.5 |
| Li2O | 10.0 | 10.0 | 10.0 | 10.0 | 10.0 | 10.0 | 10.0 |
| Nd2O3 | 5.0 | | | | | | |
| Sm2O3 | | 5.0 | | | | | |
| Eu2O3 | | | 5.0 | | | | |
| Gd2O3 | | | | 5.0 | | | |
| Tb2O3 | | | | | 5.0 | | |
| Dy2O3 | | | | | | 5.0 | |
| Yb2O3 | | | | | | | 5.0 |
| TiO2 | 7.0 | 7.0 | 7.0 | 7.0 | 7.0 | 7.0 | 7.0 |
| Na2O | | | | | | | |
| Y2O3 | | | | | | | |
| ZrO2 | | | | | | | |
| Liquidus Temperature (℃) | 1124 | 1121 | 1132 | 1119 | 1234 | 1211 | 1195 |
| Young's Modulus (Gpa) | 106.6 | 106.9 | 107.3 | 107.8 | 108.1 | 108.5 | 109.9 |
| Tg (℃) | 611 | 608 | 610 | 606 | 605 | 610 | 612 |
| Surface Roughness (Ra-nm) | 0.3 | 0.3 | 0.3 | 0.3 | 0.3 | 0.3 | 0.3 |

Table 8-1

| | | Example 49 | Example 50 | Example 51 | Example 52 | Example 53 | Example 54 |
|---|---|---|---|---|---|---|---|
| | SiO2 | 52 | 58 | 55 | 45 | 55 | 45 |
| | Al2O3 | 6 | 3 | 7 | 10 | 9 | 4 |
| | Li2O | 10 | 12 | 10 | 9 | 19 | 20 |
| | Na2O | - | 4 | - | - | - | 8 |
| | Li2O+Na2O | 10 | 16 | 10 | 9 | 19 | 28 |

(continued)

| | | Example 49 | Example 50 | Example 51 | Example 52 | Example 53 | Example 54 |
|---|---|---|---|---|---|---|---|
| Glass Composition (mol%) | CaO | 11 | 6 | 4 | 5 | 5 | 1 |
| | MgO | 11 | 6 | 14 | 15 | 3 | 4 |
| | CaO+MgO | 22 | 12 | 18 | 20 | 8 | 5 |
| | TiO2 | 7 | 8 | 5.5 | 15 | 3 | 12 |
| | Y2O3 | 3 | 0.5 | 2 | 1 | 6 | 1 |
| | ZrO2 | - | 2.5 | 2.5 | - | - | 5 |
| | Other Components | | | | | | |
| Thickness of Compressive Stress Layer ($\mu$m) | | 50 | 80 | 75 | 30 | 85 | 90 |
| Physical Properties | Young's Modulus (GPa) | 110 | 102 | 107 | 107 | 104 | 106 |
| | Specific Gravity (g/cm$^3$) | 2.87 | 2.73 | 2.79 | 2.82 | 2.71 | 2.83 |
| | Specific Modulus (x10$^6$Nm/kg) | 38 | 37 | 38 | 38 | 38 | 37 |
| | Liquidus Temperature (°C) | 1150 | 1100 | 1240 | 1110 | 1020 | 990 |
| | Viscosity at 1200°C (Pa.s) | 5 | 4 | - | 3 | 5 | 1 |
| | Viscosity at 1100°C (Pa.s) | - | - | - | - | 11 | 3 |
| | Viscosity at 1250°C (Pa.s) | - | - | 2 | - | - | - |
| | Thermal Expansion Coefficient (ppm/°C) | 7.9 | 8.0 | 6.9 | 7.0 | 8.6 | 11.5 |
| | Glass Transition Point (Tg:°C) | 569 | 554 | 615 | 620 | 465 | 400 |
| | Surface Roughness (Ra-nm) | 0.4 | 0.3 | 0.3 | 0.4 | 0.5 | 0.4 |

Table 8-2

| | | Example 55 | Example 56 | Example 57 | Example 58 | Example 59 | Example 60 | Example 61 | Example 62 | Example 63 |
|---|---|---|---|---|---|---|---|---|---|---|
| Glass Composition (mol%) | SiO2 | 40 | 65 | 60 | 45 | 58 | 45 | 45 | 58 | 52 |
| | Al2O3 | 3 | 5 | 2 | 2 | 4 | 2 | 2 | 6 | 6.5 |
| | Li2O | 7 | 4 | 16 | 10 | 5 | 12 | 11 | 12 | 10 |
| | Na2O | - | - | 5 | 7 | 1 | 3 | 2 | - | - |
| | Li2O+Na2O | 7 | 4 | 21 | 17 | 6 | 15 | 13 | 12 | 10 |
| | CaO | 18 | 7 | 4 | 15 | 3 | 12 | 10.5 | 8 | 12 |
| | MgO | 22 | 7 | 4 | 10 | 16 | 12 | 10.5 | 6 | 8 |
| | CaO+MgO | 40 | 14 | 8 | 25 | 19 | 24 | 21 | 14 | 20 |
| | TiO2 | 4 | 1 | 5 | 10 | 8 | 12 | 9 | 8 | 7 |
| | Y2O3 | 5 | 6 | 3 | 1 | 0.8 | - | - | 2 | 2.5 |
| | ZrO2 | 1 | 5 | 1 | - | 4.2 | 2 | 10 | - | 2 |
| | Other Components | | | | | | | | | |
| Thickness of Compressive Stress Layer ($\mu$m) | | 40 | 20 | 80 | 40 | 35 | 70 | 45 | 65 | 50 |
| | Young's Modulus (GPa) | 115 | 101 | 100 | 108 | 103 | 112 | 119 | 104 | 110 |
| | Specific Gravity (g/cm$^3$) | 3.12 | 2.88 | 2.67 | 2.83 | 2.79 | 2.85 | 3.05 | 2.74 | 2.89 |
| | Specific Modulus (x10$^6$Nm/kg) | 37 | 35 | 37 | 38 | 37 | 39 | 39 | 38 | 38 |
| | Liquidus Temperature (°C) | 1210 | 1110 | 990 | 1120 | 1090 | 1130 | 1210 | 1060 | 1220 |
| | Viscosity at 1200°C (Pa.s) | 2 | 10 | 3 | 2 | 4 | 2 | - | 5 | - |

| | | Example 55 | Example 56 | Example 57 | Example 58 | Example 59 | Example 60 | Example 61 | Example 62 | Example 63 |
|---|---|---|---|---|---|---|---|---|---|---|
| Physical Properties | Viscosity at 1100°C (Pa.s) | 4 | - | 7 | - | 8 | - | - | 10 | - |
| | Viscosity at 1250°C (Pa.s) | - | - | - | - | - | - | 1 | - | <1 |
| | Thermal Expansion Coeffcient (ppm/°C) | 8.9 | 7.2 | 9.6 | 9.6 | 7.8 | 9.3 | 9.2 | 7.7 | 7.8 |
| | Glass Transition Point (Tg:°C) | 570 | 620 | 455 | 565 | 610 | 565 | 525 | 565 | 610 |
| | Surface Roughness (Ra-nm) | 0.6 | 0.5 | 0.5 | 0.3 | 0.3 | 0.4 | 0.4 | 0.5 | 0.3 |

Table 9

| Example | 2 | 4 | 29 | 9 | 13 | 17 | 49 | 50 |
|---|---|---|---|---|---|---|---|---|
| SiO2 | 42 | 35 | 37 | 60 | 54 | 46 | 52 | 58 |
| Al2O3 | 2 | 8 | 2 | 0 | 0 | 0 | 6 | 3 |
| Li2O | 5 | 4 | 4 | 6 | 12 | 4 | 10 | 12 |
| Na2O | 5 | 6 | 2 | 3 | 8 | 5 | | 4 |
| CaO | 13 | 18 | 19 | 9 | 2 | 15 | 11 | 6 |
| MgO | 10 | 12 | 24 | 9 | 8 | 15 | 11 | 6 |
| TiO2 | 23 | 15 | 14 | 11 | 16 | 15 | 7 | 8 |
| Fe2O3 | | 2 | | | | | | |
| ZrO2 | | | | 2 | | | | 2.5 |
| Nb2O3 | | | | | | 2 | | |
| La2O3 | | | | | | 2 | | |
| Y2O3 | | | | | | | 3 | 0.5 |
| Dissolution of Alkali Ion ($\mu$mol/disk) | 43.3 | 75 | 82 | 5.1 | 9.5 | 18 | 6 | 2.7 |
| Dissolution of Alkali Ion ($\mu$mol/cm$^2$) | 0.72 | 1.25 | 1.37 | 0.09 | 0.16 | 0.3 | 0.1 | 0.045 |

Table 10 EXAMPLES AND COMPARATIVE EXAMPLES OF CHEMICALLY STRENGTHENED GLASS

| | Example | | | | |
|---|---|---|---|---|---|
| | 16 | 17 | 20 | 23 | 31 |
| SiO2 | 52.0 | 52.0 | 52.0 | 52.0 | 52.0 |
| Al2O3 | 8.0 | 5.5 | 6.0 | 5.5 | 5.0 |
| MgO | 8.0 | 7.0 | 11.0 | 7.0 | 10.0 |
| CaO | 14.0 | 14.0 | 11.0 | 15.0 | 10.0 |
| Li2O | 10.0 | 10.0 | 10.0 | 10.0 | 12.5 |
| Y2O3 | 2.0 | 2.5 | 3.0 | 3.5 | 3.0 |
| TiO2 | 6.0 | 7.0 | 7.0 | 7.0 | 7.5 |
| ZrO2 | 2.0 | 2.0 | | | |
| Transition Point (℃) | 607 | 607 | 598 | 603 | 580 |
| Young's Modulus (Gpa) | 109.8 | 110.2 | 110.0 | 110.3 | 110.5 |
| Surface Roughness （Ra－nm） | 0.3 | 0.3 | 0.3 | 0.3 | 0.3 |
| Bending Strength （MPa） | 735 | 706 | 794 | 774 | 843 |
| Treatment Bath | 60%KNO3+40%NaNO3 | 60%KNO3+40%NaNO3 | KNO3 | NaNO3 | 60%KNO3+40%NaNO3 |
| Ion Exchange Temperature (℃) | 500 | 500 | 490 | 500 | 480 |
| Processing Time (h) | 4.0 | 4.0 | 4.0 | 4.0 | 4.0 |

**Claims**

1. Use in an information recording medium or as an information recording medium substrate of a glass substance having a Young's modulus not smaller that 100Gpa and a liquidus temperature not higher than 1250°C.

2. The use of claim 1, wherein said glass substance includes $TiO_2$ and CaO as glass components.

3. The use of claim 1 wherein the glass substance includes, as glass components, 6-23 mol% of $TiO_2$, 13-20 mol% of CaO, 23-30 mol% of (MgO+CaO), 6-10 mol% of ($Na_2O+Li_2O$), 0-8 mol% of $Al_2O_3$, and 35-65 mol% of $SiO_2$.

4. The use of claim 1 wherein the glass substance includes, as glass components, 6 mol% of $TiO_2$, 15 mol% MgO, 15 mol% of CaO, 6 mol% of $Li_2O$, 8 mol% of $Al_2O_3$, 0 mol% of $Na_2O$ and 50 mol% of $SiO_2$.

5. The use of claim 1 wherein the glass substance includes, as glass components, 23 mol% of $TiO_2$, 13 mol% of CaO, 10 mol% MgO, 5 mol% of $Li_2O$, 5 mol% of $Na_2O$, 2 mol% of $Al_2O_3$, and 42 mol% of $SiO_2$.

6. The use of claim 1 wherein the glass substance consists of glass components, 14 mol% of $TiO_2$, 20 mol% of CaO, 10 mol% MgO, 6 mol% of $Li_2O$, 4 mol% of $Na_2O$, 0 mol% of $Al_2O_3$ and 46 mol% of $SiO_2$.

7. The use of any of claims 3 to 6 wherein the substrate is press-moulded from a melt so as to form a disk-shaped object having a diameter of about 100mm and a thickness of 1 mm.

8. The use of any preceding claim wherein the glass substance has a viscosity of not smaller than 3 Pa.s (30 Poise) in a formable temperature range not lower then the liquidus temperature.

9. The use of any preceding claim wherein the glass substance has been chemically strengthened.

10. The use of any preceding claim wherein the information recording medium is a magnetic disc, an optical disc or a magnetooptic disc.

**Patentansprüche**

1. Verwendung eines Substrates aus einem Glas mit einem Elastizitätsmodul nicht kleiner als 100 GPa und einer Liquidustemperatur nicht höher als 1250°C in einem Aufzeichnungsmedium oder als ein Aufzeichnungsmedium.

2. Verwendung nach Anspruch 1, bei der das Glassubstrat $TiO_2$ und CaO als Glaskomponenten enthält.

3. Verwendung nach Anspruch 1, bei der die Glassubstanz als Glaskomponenten 6-23 mol% von $TiO_2$, 13-20 mol% von CaO, 23-30 mol% von (MgO+CaO), 6-10 mol% von ($Na_2O+Li_2O$), 0-8 mol% von $Al_2O_3$ und 35-65 mol% von $SiO_2$ enthält.

4. Verwendung nach Anspruch 1, bei der die Glassubstanz als Glaskomponenten 6 mol% von $TiO_2$, 15 mol% MgO, 15 mol% von CaO, 6 mol% von $Li_2O$, 8 mol% von $Al_2O_3$, 0 mol% von $Na_2O$ und 50 mol% von $SiO_2$ enthält.

5. Verwendung nach Anspruch 1, bei der die Glassubstanz als Glaskomponenten 23 mol% von $TiO_2$, 13 mol% von CaO, 10 mol% MgO, 5 mol% von $Li_2O$, 5 mol% von $Na_2O$, 2 mol% von $Al_2O_3$ und 42 mol% von $SiO_2$ enthält.

6. Verwendung nach Anspruch 1, bei der die Glassubstanz aus Glaskomponenten 14 mol% von $TiO_2$, 20 mol% von CaO, 10 mol% MgO, 6 mol% von $Li_2O$, 4 mol% von $Na_2O$, 0 mol% von $Al_2O_3$ und 46 mol% von $SiO_2$ besteht.

7. Verwendung nach einem der Ansprüche 3 bis 6, bei der das Substrat aus einer Schmelze so pressgegossen wird, dass es ein scheibenförmiges Objekt bildet mit einem Durchmesser von ungefähr 100 mm und einer Dicke von 1 mm gebildet wird.

8. Verwendung nach einem der vorhergehenden Ansprüche, bei der die Glassubstanz eine Viskosität nicht kleiner als 3 Pa.s (30 Poise) in einem formbaren Temperaturbereich nicht niedriger als die Liquidustemperatur aufweist.

**9.** Verwendung nach einem der vorhergehenden Ansprüche, bei der die Glassubstanz chemisch verstärkt worden ist.

**10.** Verwendung nach einem der vorhergehenden Ansprüche, bei der das Informationsaufzeichnungsmedium eine Magnetplatte, eine optische Platte oder eine magnetooptische Platte ist.

**Revendications**

**1.** Utilisation dans un support d'enregistrement d'information ou comme un substrat de support d'enregistrement d'information d'une substance en verre ayant un module d'Young non inférieur à 100 Gpa et une température du liquidus non supérieure à 1250 °C.

**2.** Utilisation de la revendication 1, où ladite substance en verre inclue du $TiO_2$ et CaO comme composants en verre.

**3.** Utilisation de la revendication 1 où la substance en verre inclue, comme composants en verre, 6-23% molaire de $TiO_2$, 13-20 % molaire de CaO, 23-30 % molaire de (MgO + CaO), 6-10 % molaire de ($Na_2O$ + $Li_2O$), 0-8 % molaire de $Al_2O_3$, et 35-65 % molaire de $SiO_2$.

**4.** Utilisation de la revendication 1 où la substance en verre inclue, comme composants en verre, 6 % molaire de $TiO_2$, 15 % molaire de MgO, 15 % molaire de CaO, 6 % molaire de $Li_2O$, 8 % molaire de $Al_2O_3$, 0 % molaire de $Na_2O$ et 50 % molaire de $SiO_2$.

**5.** Utilisation de la revendication 1 où la substance en verre inclue, comme composants en verre, 23 % molaire de $TiO_2$, 13 % molaire de CaO, 10 % molaire de MgO, 5 % molaire de $Li_2O$, 5 % molaire de $Na_2O$, 2 % molaire de $Al_2O_3$, et 42 % molaire de $SiO_2$.

**6.** Utilisation de la revendication 1 où la substance en verre consiste en des composants en verre, 14 % molaire de $TiO_2$, 20 % molaire de CaO, 10 % molaire de MgO, 6 % molaire de $Li_2O$, 4 % molaire de $Na_2O$, 0 % molaire de $Al_2O_3$, et 46 % molaire de $SiO_2$.

**7.** Utilisation de l'une quelconque des revendications 3 à 6 où le substrat est moulé par pressage à partir d'une fonte de sorte à former un objet en forme de disque ayant un diamètre d'environ 100 mm et une épaisseur de 1 mm.

**8.** Utilisation de l'une quelconque des revendications précédentes où la substance en verre a une viscosité non inférieure à 3 Pa.s (30 Poise) dans une plage de température formable non inférieure à la température du liquidus.

**9.** Utilisation de l'une quelconque des revendications précédentes où la substance en verre a été renforcée chimiquement.

**10.** Utilisation de l'une quelconque des revendications précédentes où le support d'enregistrement d'information est un disque magnétique, un disque optique ou un disque magnéto-optique.

Fig. 1